# EUROPEAN PATENT SPECIFICATION

(11) **EP 1 657 039 B1**
(45) Date of publication and mention of the grant of the patent: **26.10.2011**
(21) Application number: 04771720.2
(22) Date of filing: 17.08.2004
(51) Int. Cl.: F01N 3/022, B01D 46/00, B01D 46/24

(54) **Method for manufacturing a ceramic honeycomb filter**
Verfahren zur Herstellung eines keramischen Wabenfilters
Procédé de production d'un filtre céramique nid d'abeilles

(30) Priority: 20.08.2003 JP 2003295888; 05.03.2004 JP 2004062795
(43) Date of publication of application: 17.05.2006
(73) Proprietor: NGK Insulators, Ltd., Nagoya-city, Aichi 467-8530 (JP)
(72) Inventor: Noguchi, Yasushi, NGK INSULATORS, LTD., Nagoya-shi, Aichi 4678530 (JP); Hirai, Sadaaki, NGK INSULATORS, LTD., Nagoya-shi, Aichi 4678530 (JP); Mori, Shinya, NGK INSULATORS, LTD., Nagoya-shi, Aichi 4678530 (JP); Ichikawa, Yukihito, NGK INSULATORS, LTD., Nagoya-shi, Aichi 4678530 (JP); Iwabuchi, Muneyuki, NGK INSULATORS, LTD., Nagoya-shi, Aichi 4678530 (JP)
(74) Representative: Paget, Hugh Charles Edward
(86) International application number: PCT/JP2004/011759
(87) International publication number: WO 2005/018893

(56) References cited:
- EP-A- 1 142 619
- DE-A1- 10 012 501
- JP-A- 7 080 329
- JP-A- 9 299 730
- JP-A- 11 277 522
- JP-A- 2000 053 464
- US-B1- 6 506 336

## Description

### Technical Field

The present invention relates to a method for manufacturing a honeycomb formed body suitable for use in manufacturing, for example, a filter for collecting dust or treating water.
More particularly, the present invention relates to a method for manufacturing a honeycomb formed body capable of effectively preventing internal defects such as small holes, cuts, and burrs and improving strength,
which is useful as a honeycomb filter superior in filtering performance (trapping efficiency).

### Background Art

A porous honeycomb structure made of a ceramic superior in resistances to heat and corrosion, and mechanical strength is used in a dust collecting and water treating filter for use in an environmental measure such as pollution prevention and an application such as product recovery from a high-temperature gas in various fields including chemistry, power, iron and steel, and industrial waste disposal. For example, a porous honeycomb structure made of a ceramic is used in a dust collecting filter for use under a corrosive gas atmosphere at a high temperature, for example, a diesel particulate filter (DPF) which traps fine particles (soot) discharged from a diesel engine.

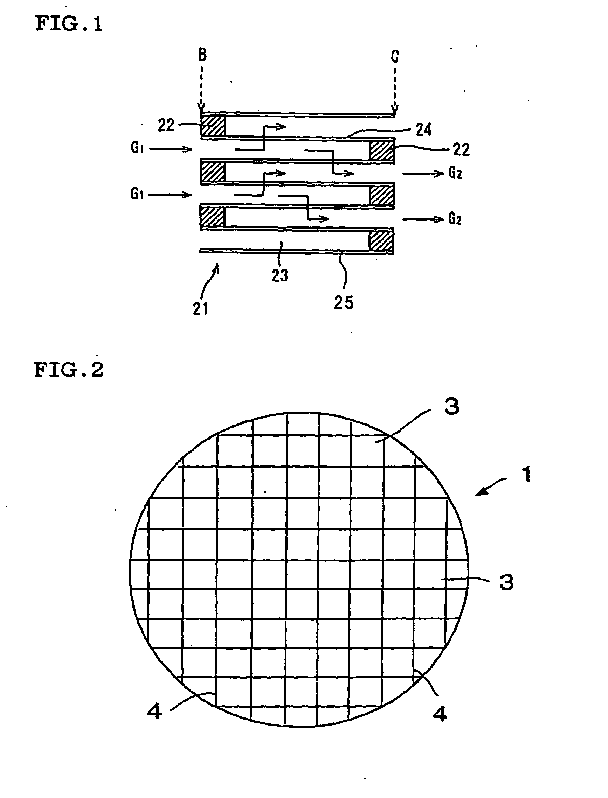

Examples of the filter (hereinafter referred to as the "honeycomb filter") using the porous honeycomb structure include a honeycomb filter 21 shown in FIG. 1 having a structure in which an inlet-side end B and an outlet-side end C of a large number of cells 23 of a porous honeycomb structure 25 are alternately plugged by plugging portions 22. According to the honeycomb filter 21 having such structure, when a gas G₁ to be treated is introduced into the cells 23 via the inlet-side end B, foreign matters such as fine particles are trapped by partition walls 24. On the other hand, since a treated gas G₂ which has passed through the porous partition wall 24 to flow into the adjacent cell 23 is discharged from the outlet-side end C, it is possible to obtain the treated gas G₂ from which the fine particles in the gas G₁ to be treated are separated.

The above-described porous honeycomb structure is manufactured by, for example, a method of: mixing a forming material containing water and an aggregate particulate material such as a ceramic to thereby obtain a forming blend (wet powder); kneading a forming blend (wet powder) to thereby obtain a clay; forming the clay into a honeycomb structure; drying the clay to thereby obtain a honeycomb formed body; and firing the honeycomb formed body. However, not a few internal defects such as small holes, cuts, and burrs exist in the porous honeycomb structure obtained by such manufacturing method, and a filtering performance (trapping efficiency) of the filter using this structure cannot be necessarily said to be sufficient.

Especially, in recent years, thinning of the partition wall has rapidly proceeded for the purpose of reducing pressure losses at a time when the gas passes through the partition wall, and improving a treating capability of the filter. Since internal defects such as the small holes, cuts, and burrs are structurally easily generated during the manufacturing in the porous honeycomb structure having such thin partition wall, drop of the filtering performance (trapping efficiency) of the filter due to these internal defects has become a remarkably serious problem.

It is known that the generation of the internal defects is caused by presence of a coarse agglomerate formed by coagulating fine particles in the aggregate particulate material. That is, in the above-described manufacturing method, as a forming method, extrusion forming in which a die having slits of a shape complementary to that of the partition walls is adopted in many cases. When the slits are clogged with the coarse agglomerates, a part of the slits are closed, and supply of the clay to the corresponding portion is inhibited. Therefore, the internal defects are generated in the honeycomb formed body (and the porous honeycomb structure).

Moreover, it is demanded that strength of the porous honeycomb structure be improved. This is because the improvement of the strength can result in improvement of the filtering performance of the filter using the porous honeycomb structure. In general, since porosity is considered to be proportional to the filtering performance, an attempt is sometimes made to increase the porosity of the porous honeycomb structure as one means for reducing the pressure losses and improving the treating capability of the filter. However, since the high porosity causes the strength drop, it has been difficult to apply the filter as a dust collecting filter such as the DPF.

To solve such problem, the present inventor has proposed a method for manufacturing a honeycomb ceramic structure, in which the aggregate particulate material is once formed into a slurry, the material is passed through a sieve having a predetermined aperture to remove the coarse agglomerates, thereafter the material is powdered, and the powder is used in preparing the forming material (see, e.g., International Publication No. 01/058827 brochure (patent document)).

### Disclosure of the Invention

However, the above-described manufacturing method is a very effective method from viewpoints that coarse agglomerates are removed, internal defects of a porous honeycomb structure are prevented, and strength is improved. However, since the aggregate particulate material needs to be once formed into slurry, there has been a problem that a process becomes complicated, and an operation becomes troublesome.

The present invention has been developed in view of the above-described problems of the conventional technology, and an object thereof is to provide a method for manufacturing a honeycomb formed body capable of easily preventing generation of internal defects and improving strength without involving increase of the number of steps or any troublesome operation, a method for manufacturing a honeycomb filter, and thus to provide a honeycomb filter having few internal defects and high strength and being superior in filtering performance (trapping efficiency).

As a result of intensive research to solve the above-described problem, the present inventor has found that a measure can be taken to prevent at least coarse agglomerates from being mixed into clay among agglomerates formed by agglomerating fine particles in an aggregate particulate material contained in a forming material in steps of mixing and kneading the forming material including the aggregate particulate material with water to obtain the clay, whereby achieving the above-described object, and has developed the present invention. That is, the present invention provides a method for manufacturing a honeycomb formed body as set out in claim 1. Preferably the surface of the aggregate particulate material is coated before the mixing step. Preferably the aggregate particulate material is classified beforehand to remove an agglomerate before the mixing step. Preferably when water is added, a surfactant is further added as a dispersant. Preferably, in the mixing step pressurizing vibration is applied to the forming material. The pressurizing vibration may be generated by ultrasonic waves, or by containing the forming material and pebbles in a container, and vibrating the container. The mixing step may be performed using a mixer having a stirring blade, and the mixing is carried out by rotating the stirring blade to stir the forming material whiling applying a shearing force to the forming material. Preferably the stirring blade is rotated at 500 rpm or more, or the stirring blade may be rotated at a peripheral speed of 2 m/second or more. Preferably the mixing step is performed using a mixer having a cooling function. Preferably the mixing step and the kneading step are performed with individual devices, respectively, and the mixer which performs the mixing step is directly connected to a kneader which performs the kneading step. Preferably there is used, as the aggregate particulate material, a cordierite forming material which contains alumina (Al₂O₃) fine particles having an average particle diameter of 10 µm or less and/or aluminum hydroxide (Al(OH)₃) fine particles having an average particle diameter of 10 µm or less. Preferably a material containing a pore former and a binder in addition to the aggregate particulate material and water is used as the forming material. Preferably microcapsules made of a foamed resin are used as the pore former. Preferably when the water is added, it is added and mixed while sprayed. Preferably the forming is extrusion forming by use of a die having slits of a shape complementary to that of partition walls. Preferably there is used, as the aggregate particulate material, a material containing a powder passed through a sieve whose aperture is 4/5 or less of a slit width of the die. Preferably the extrusion forming is performed using the die in which back holes are provided in all intersections of the slits. Preferably, in the manufacturing of the honeycomb formed body, in the invention, at least a part of a corner portion of a cell block forming the slit of the die is provided with a curvature. Preferably the extrusion forming is performed using a biaxial continuous former.
Preferably when the extrusion forming is carried out, the clay is passed through a sieve having an aperture of 160 to 278 µm, and extruded from the die.
A honeycomb filter, may be made by a method comprising the steps of: obtaining a honeycomb formed body by the manufacturing method according to the invention as described above ; firing the honeycomb formed body to thereby obtain a porous honeycomb structure; alternately plugging one opening and the other opening of a large number of cells of the porous honeycomb structure to thereby obtain a plugged honeycomb structure; and firing the plugged honeycomb structure to obtain the honeycomb filter constituted so that foreign matters are trapped by partition walls, when a fluid to be treated introduced into a part of the cells passes through the porous partition wall to flow into the adjacent cell.
Alternatively, a honeycomb filter, may be made by a method comprising the steps of: obtaining a honeycomb formed body by the manufacturing method according to the invention as described above ; alternately plugging one opening and the other opening of each of a large number of cells of the honeycomb formed body to thereby obtain a plugged honeycomb formed body; and firing the plugged honeycomb formed body to obtain the honeycomb filter constituted so that foreign matters are trapped by partition walls, when a fluid to be treated introduced into a part of the cells passes through the porous partition wall to flow into the adjacent cell. There may be obtained a honeycomb filter comprising: a porous honeycomb structure having a large number of cells formed by partitioning the structure by porous partition walls; and plugging portions which alternately plug one opening and the other opening of each of the large number of cells, the filter being constituted so that foreign matters are trapped by partition walls, when a fluid to be treated introduced into a part of the cells passes through the partition wall to flow into the adjacent cell, wherein a soot leak cell ratio evaluated by a soot printing test is 1 cell/1000 cells or less.
At least the porous honeycomb structure may be constituted of cordierite.

In the method for manufacturing the honeycomb formed body of the present invention, in the step of mixing and kneading the material to obtain the clay, means for performing the mixing step and the kneading step independently of each other can prevent agglomerates from being easily formed by agglomeration of fine particles in the aggregate particulate material included in the forming material.

Furthermore, according to the method for manufacturing the honeycomb formed body of the present invention, the agglomerates can be removed from the forming blend (wet powder) or crushed agglomerates can be uniformly dispersed in the forming blend (wet powder) by preferable means such as means for coating the surface of the aggregate particulate material, classifying the aggregate particulate material, adding the surfactant in addition to water during the mixing and/or the kneading, mixing the material while applying the pressurizing vibration, and mixing the material while applying the shearing force generated by the rotation of the stirring blade. Therefore, the agglomerate is inhibited from being mixed into the clay, and at least the coarse agglomerate is prevented from being mixed into the clay.

Moreover, according to the method for manufacturing the honeycomb formed body of the present invention, these measures are taken, so that the agglomerates as causes for internal defects are crushed and removed. Therefore, the generation of the internal defects is easily prevented, and strength can be improved without involving a complicated step of forming the aggregate particulate material into slurry, or involving any troublesome operation. The honeycomb filter obtained using the present invention has few internal defects and high strength, and is superior in filtering performance (trapping efficiency). It is to be noted that in the present description, the strength indicates an isostatic strength which is a strength against isotropic pressurizing.

### Brief Description of the Drawings

FIG. 1 is a schematic diagram showing an example of a honeycomb filter using a porous honeycomb structure;
FIG. 2 is a schematic diagram showing a "honeycomb structure" in accordance with an example of the porous honeycomb structure;
FIG. 3 is a schematic diagram showing an inspection device for use in a soot printing test; and
FIG. 4 is a graph showing results of an isostatic strength test.

### Description of Reference Numerals

1, 25 ... porous honeycomb structures, 3, 23 ... cells, 4, 24 ... partition walls, 22 ... plugging portions, 21 ... honeycomb filter, 31 ... inspection device, 32 ... support base, 34 ... soot generator, 36 ... sieve, 38 ... air exhaust tube, 40 ... air supply pipe, 42 ... changeover valve, 44 ... air exhaust pipe, 46 ... presser mesh, B ... inlet-side end, C ... outlet-side end, G₁ ... gas to be treated, and G₂ ... treated gas.

### Best Mode for Carrying out the Invention

There will be specifically described best modes for carrying out a method for manufacturing a honeycomb formed body of the invention, but the present invention is not limited to these embodiments. Means similar or equivalent to those described in the present description are applicable in carrying out or verifying the present invention, but preferable means are the following described means.

### (1) Method for manufacturing honeycomb formed body

In the method for manufacturing the honeycomb formed body, mixing = first mixing and/or second mixing. Moreover, the mixing simply mentioned in the method for manufacturing the honeycomb formed body refers to both of the first and second mixing. Furthermore, the simply mentioned forming blend refers to both of the forming blend (dry powder) and the forming blend (wet powder).

### (i) Mixing step

The mixing step mixes (first mixing) two or more types of aggregate particulate materials including fine particles having an average particle diameter of 10 µm or less to thereby obtain the forming blend (dry powder). Thereafter, the method for manufacturing the honeycomb formed bodies further adds water and performs mixing (second mixing) to thereby obtain the forming blend (wet powder). It is to be noted that the adding of water, dispersant, additive and the like is described in the description of the mixing step.

Aggregate particles are particles as main constituting components of the porous honeycomb structure (sintered article), and the aggregate particulate material is a substance as a raw material. Examples of the aggregate particulate material in the present invention include a cordierite forming material, mullite, alumina, aluminum titanate, lithium aluminum silicate, silicon carbide, silicon nitride, or a mixture of them. However, the aggregate particulate material is not limited to a ceramic, and may be a metal. For example, metal silicon as a constituting substance of a metal silicon (Si)-silicon carbide (SiC) sintered article can be the aggregate particulate material in the present invention.

The "cordierite forming material" mentioned in the present description means a substance to be fired and converted into cordierite, and examples of the material include a material obtained by mixing talc, kaolin, alumina, aluminum hydroxide, silica and the like so that a fired composition is a cordierite theoretical composition (2MgO·2Al₂O_{3·}5SiO₂).

The aggregate particulate material in the present invention includes fine particles having an average particle diameter of 10 µm or less. The fine particles included in such aggregate particulate material agglomerate and easily form an agglomerate as a cause for an internal defect of the honeycomb formed body (and the porous honeycomb structure). According to the method for manufacturing the honeycomb formed body of the present invention, even in a case where such aggregate particulate material is used, it is possible to obtain the honeycomb formed body (and the porous honeycomb structure) having few internal defects.

Examples of the fine particles having an average particle diameter of 10 µm or less include alumina (Al₂O₃) fine particles (average particle diameter of about 1 to 10 µm), aluminum hydroxide (Al(OH)₃) fine particles (average particle diameter of about 0.2 to 10 µm) and the like in the cordierite forming material. That is, in the method for manufacturing the honeycomb formed body of the present invention, aggregate particulate material can be preferably used, when using the cordierite forming material including the alumina (Al₂O₃) fine particles having an average particle diameter of 10 µm or less and/or aluminum hydroxide (Al(OH)₃) fine particles having an average particle diameter of 10 µm or less. It is to be noted that the "average particle diameter" mentioned in the present description means a value of a 50% particle diameter measured with an X-ray transmission type grain size distribution measurement device (e.g., trade name: Sedigraph model 5000-02, manufactured by Shimadzu Corp., etc.) in which Stoke's liquid phase sedimentation method is used as a measurement principle, and detection is performed by an X-ray transmission method.

The forming material in the present invention includes at least two or more types of aggregate particulate materials and water as a dispersion medium, but another additive (e.g., a pore former, a binder, a dispersant or the like) may be contained if necessary.

The pore former is an additive which burns out to form pores during the firing of the honeycomb formed body to thereby increase porosity and obtain a high-porosity porous honeycomb structure. Therefore, examples of the pore former include combustible materials which burn out during the firing of the honeycomb formed bodiesuch as graphite, flour, starch, phenol resin, polymethyl methacrylate, polyethylene, and polyethylene terephthalate. Above all, microcapsules (acryl resin based microcapsules or the like) made of a foamed resin can be especially preferably used. Since the microcapsules made of the foamed resin are hollow, the high-porosity porous honeycomb structure is obtained by addition of a small amount of the resin. Additionally, the microcapsules have an advantage that little heat is generated during the firing, and generation of cracks due to a thermal stress can be reduced.

The binder is an additive which performs a reinforcer function of imparting fluidity to the clay during honeycomb forming to maintain a mechanical strength of the honeycomb formed body before fired (honeycomb dry article). As the binder, for example, hydroxypropyl methyl cellulose, methyl cellulose, hydroxyethyl cellulose, carboxyl methyl cellulose, polyvinyl alcohol or the like is preferably usable.

The dispersant (surfactant) is an additive which promotes dispersion of the aggregate particulate material or the like into water to obtain a homogeneous forming blend. Therefore, as the dispersant, it is possible to preferably use a substance having a surface active effect, such as ethylene glycol, dextrin, fatty acid soap, or polyalcohol. An added amount of the dispersant (surfactant) is preferably less than 1.5% by mass in terms of a content, more preferably 0.01 to 1% by mass. This is because a preferable dispersion effect is obtained.

The method for manufacturing the honeycomb formed body in the present invention is **characterized in that** the mixing step is performed independently of the subsequent kneading step. The mixing step sufficiently mixes (first mixing) the aggregate particulate material in a dry stage in which any water is not added. Accordingly, after adding water (in the subsequent second mixing step), components of the forming material, that is, at least two or more types of aggregate particulate materials and water are uniformly dispersed. Therefore, the agglomerate formable by agglomerating the fine particles in the aggregate particulate material is not easily mixed in a clay obtained later by the kneading. Since the generated agglomerate is crushed with a mixer for use, the mixture of the agglomerate into the clay can be inhibited.

According to the method for manufacturing the honeycomb formed body in the present invention, means for coating the surface of the aggregate particulate material beforehand can be preferably adopted before performing the mixing. In this case, the agglomeration of the fine particles of the aggregate particulate material is inhibited, and the generated agglomerate can be easily crushed. The aggregate particulate material having the coated surface is available in the market, and examples of the material include a material formed by treating the surface of aluminum hydroxide with a stearic acid to improve dispersibility.

Moreover, information aggregate particulate material is classified beforehand to remove the mixed agglomerate before performing the mixing. Accordingly, it is possible to inhibit the mixture of the agglomerate into the clay. It is to be noted that the classification can be performed by a cyclone (device to separate/classify the material by use of a centrifugal force).

In the method for manufacturing the honeycomb formed body in the present invention, water is further added to the forming blend (dry powder) obtained by mixing (first mixing) the aggregate particulate material, and mixed (second mixing) to obtain the forming blend (wet powder). However, in this case, when water as the dispersion medium is mixed together with the forming blend (dry powder), it is difficult to uniformly disperse water in many cases. Therefore, in the method for manufacturing the honeycomb formed body in the present invention, the second mixing is preferably performed while spraying water to the forming blend (dry powder mixed with two or more types of aggregate particulate materials). In this case, it is possible to avoid a phenomenon in which the content of the forming blend (and the clay, honeycomb formed body) fluctuates with portions, and it is therefore possible to obtain the porous honeycomb structure whose porosity does not fluctuates with the portions.

In the method for manufacturing the honeycomb formed body in the present invention, typical means relating to the mixing is not limited, but when the mixing is carried out while applying the pressurizing vibration to the forming material by use of a predetermined mixer, the agglomerate can be inhibited from being crushed and mixed into the clay. Examples of the mixer which realizes such mixing include: an ultrasonic dispersing machine which realizes the pressurizing vibration due to ultrasonic waves; and a pot mill which contains the honeycomb structure and pebbles in a container and which vibrates the container to realize the pressurizing vibration. Especially, the mixing by the pot mill is means superior for obtaining an effect of uniformly dispersing the constituting components of the forming material.

As the mixer for use in the mixing, a mixer other than the above-described mixers can be used, and the mixer can be selected in accordance with the agglomerate to be crushed. Either of the mixers of an indirect mixing system and a direct mixing system may be used. As the indirect mixing system, there is a mixer (e.g., Flash Blender manufactured by Kabushiki Kaisha Acoh) which performs the mixing (air mixing/aeration) by means of bubbles or the like in addition to the dispersing machine using the ultrasonic waves. The direct mixing system is further sorted as an outer shell movement system, an internal movement system, or a mixer of the outer shell movement system combined with the internal movement system. Typical examples of the outer shell movement system mixer include a double cone type mixer, V-type mixer, a concrete mixer, and a rocking mixer. Typical examples of the internal movement system include a ribbon type mixer, a screw type mixer, Warner type mixer, a kneader type mixer, a versatile mixing stirrer, and Nauter Mixer (e.g., manufactured by Hosokawa Micron Co., Ltd.). Typical examples of the mixer of the outer shell movement system combined with the internal movement system include a pan rotary type forcing mixer, and an omni mixer (diffusion mixing, e.g., the mixer manufactured by Chiyoda Giken Kogyo Kabushiki Kaisha).

Further in the method for manufacturing the honeycomb formed body in the present invention, when the forming material is stirred and mixed by use of a predetermined mixer, while applying a shearing force to the material, the agglomerate formed by agglomerating the fine particles in the aggregate particulate material included in the forming material can be crushed, and it is possible to inhibit the mixture of the agglomerate into the clay. Especially, in the method for manufacturing the honeycomb formed body in the present invention, when the material is stirred and mixed while applying the shearing force to the material, an effect of inhibiting the mixture of the agglomerate into the clay is large in the mixing immediately before the kneading step, that is, in the mixing (second mixing) performed by adding water to the forming blend (dry powder) obtained by mixing (first mixing) the aggregate particulate material.

To stir the forming material while applying the shearing force to the material, a stirring/dispersing force is insufficient in the mixer (e.g., a sigma kneader, a ribbon mixer or the like) which has been heretofore generally used in mixing the powder and which rotates the stirring blade at a low speed of about 20 to 200 rpm. It is preferable to use a mixer which is capable of rotating the stirring blade at a higher speed and which is superior in the stirring/dispersing force.

Examples of the mixer superior in the stirring/dispersing force include: an ultrahigh speed shearing omni mixer manufactured by Chiyoda Giken Kogyo Kabushiki Kaisha; a vertical granulator manufactured by Kabushiki Kaisha Powrex, kneading/high-speed stirring granulator SPG series manufactured by DALTON Co.; an axial mixer manufactured by Sugiyama Jyukogyo Kabushiki Kaisha; High Speeder manufactured by Pacific Machinery & Engineering Co., Ltd.; Turbulizer manufactured by Hosokawa Micron Co., Ltd.; Super Mixer manufactured by Kabushiki Kaisha Kawata; and R-type Eirich Mixer manufactured by Nippon Eirich Co., Ltd.

Furthermore, examples of the mixer preferable for stirring the forming material while applying the shearing force to the material include a ploughshare mixer (e.g., trade name: Ploughshare Mixer, manufactured by Pacific Machinery & Engineering Co., Ltd., trade name: WA, manufactured by WAM Japan Col, Ltd., trade name: WA-75, manufactured by Yamato Kihan Kabushiki Kaisha or the like) which is mixer of such a type that a lateral type cylindrical drum is therein provided with a spade or shovel shaped stirring blade (ploughshare) and a cross knife shaped stirring blade (chopper). The ploughshare rotates centering on a driving shaft disposed in a horizontal direction at a low speed, and the chopper rotates centering on a driving shaft disposed in a vertical direction at a high speed). According to the ploughshare mixer, a floating diffusion function by the ploughshare is combined with a high-speed shearing function by the chopper to crush the agglomerate formed by agglomerating the fine particles included in the forming material, and it is possible to obtain the forming blend in which the crushed agglomerates are uniformly dispersed.

Moreover, Henschel mixer (e.g., trade name: Mitsui Henschel Mixer, manufactured by Mitsui Mining Co., Ltd. or the like) can be preferably used which is a mixer of such a type that a vertical type cylindrical drum is therein provided with a multistage blade including an impeller shaped lower stirring blade and an annular upper stirring blade, and the multistage blade rotates centering on the driving shaft disposed in the vertical direction at the high speed. According to the Henschel mixer, a function of winding upward the forming material by the lower stirring blade is combined with a strong shearing function by the upper stirring blade to crush the agglomerate formed by agglomerating the fine particles included in the forming material, and the forming blend can be obtained in which the crushed agglomerates are uniformly dispersed.

However, in the mixing by means of the stirring blade, a capacity efficiency is low owing to the presence of the stirring blade, the forming material adheres to the stirring blade itself or between the container and the stirring blade, and the mixing is inferior in respect of a material recovery ratio. It is necessary to consider a fear of contamination of the forming material as a result of wear on the stirring blade. Furthermore, since a difference in peripheral speed is made between a root and an outer periphery of the stirring blade, it is difficult to uniformly disperse the material in a volume. Therefore, in a case where these respects raise problems, it is preferable to adopt the means for coating the surface of the aggregate particulate material, the means for classifying the aggregate particulate material, or the means for mixing the material while applying the pressurizing vibration by means of the ultrasonic waves, the pot mill or the like.

In the mixer having the rotating stirring blade, there is not any restriction on a rotation number per unit in the stirring blade as long as the speed is substantially higher than 200 rpm, but the rotation number is preferably 500 rpm or more, more preferably 1000 to 5000 rpm. There is not any restriction on the peripheral speed of the stirring blade, but the peripheral speed is preferably 2 m/second, more preferably 3 to 100 m/second. When the rotation number is less than 500 rpm, or the peripheral speed is less than 2 m/second, there is an increasing fear that the agglomerate is insufficiently crushed as compared with preferable conditions. Upper limits are not determined as long as the stirring blade can be stably and continuously driven, but in consideration of proceeding of the wear on the blade, and possibility of the generation of breakage or the like of the blade, the rotation number is preferably 5000 rpm or less, and the peripheral speed is 100 m/second or less. It is to be noted that the peripheral speed of the stirring blade means a movement speed of a tip of the stirring blade.

There is not any special restriction on a stirring time, but the time is set to preferably 5 to 30 minutes in a case where the stirring blade is rotated at 500 rpm, and 3 to 20 minutes in a case where the blade is rotated at 1000 rpm. When the stirring time is less than the above-described range, the crushing of the agglomerate easily becomes insufficient, and there is unfavorably a fear that the generation of the internal defect of the honeycomb formed body (and the porous honeycomb structure) cannot be prevented. When the above-described range is exceeded, there is unfavorably a fear that the wear on the mixer easily proceeds and that a durable time is reduced.

It is to be noted that all of the mixers for use in the mixing step preferably have a cooling function. Reasons are that a long-period safe operation is realized, and an averse influence on the forming material by heat generation is eliminated.

The "crushed agglomerates" mentioned in the present invention indicate that the agglomerates are completely crushed and return to the state of fine particles which are primary particles. They also indicate that the agglomerates are not completely crushed, but particle diameters are reduced. In this case, an average particle diameter of the crushed agglomerates is set to preferably 200 µm or less, more preferably 100 µm or less, especially preferably 50 µm or less.

In the method for manufacturing the honeycomb formed body of the present invention, a mixed state of the material (crushed situation of the agglomerate by the mixer or the like or a satisfactory degree of the crushing) can be evaluated by sieving the forming blend (dry powder) obtained by the first mixing with a sieve having an aperture of 500 µm, and measuring a mass of residue (agglomerate) on the sieve. In the method for manufacturing the honeycomb formed body of the present invention, the material is mixed until the agglomerate on the sieve indicates 1% by mass or less. The material is more preferably mixed until the agglomerate indicates 0.2% by mass or less. It is preferable to select the mixer capable of obtaining such satisfactory mixed state in a short time depending on the forming material for use.

Moreover, the mixed state of the material can be evaluated with a thermogravimeter. Specifically, a predetermined amount (e.g., 20 mg) of the forming blend (dry powder) or the forming blend (wet powder) which is a mixture is sampled, and a decrease of the mass of the binder, material crystal water or the like is measured with the thermogravimeter (TG). This measurement is repeated predetermined times (e.g., ten times), and a fluctuation of a mass decrease ratio of the TG is evaluated. For example, in a case where aluminum hydroxide that easily agglomerates is used, when the mixing is not sufficient, aluminum hydroxide segregates, and the fluctuation of the mass decrease ratio of the TG increases. In the method for manufacturing the honeycomb formed body of the present invention, the material is preferably mixed until a value (referred to as a TG mixture degree in the present description) obtained by dividing a standard deviation of the mass decrease ratio by an average value of the mass decrease ratio reaches 0.2 or less. The material is more preferably mixed until the value reaches 0.1 or less. Unlike the method for manufacturing the honeycomb formed body of the present invention, in a case where the independent mixing step is not performed before the kneading step, the TG mixture degree is about 0.5, and it is difficult to set the TG mixture degree to 0.2 or less. It is to be noted that, needless to say, the mixed state can be evaluated by means of the TG mixture degree even if dried clay or formed article is used.

Furthermore, the mixed state of the material can be evaluated by use of X-ray CT. A density distribution of the honeycomb formed body is measured by the X-ray CT. When the density distribution is uniform, it can be judged that the material is uniformly mixed. The material is preferably mixed until a value (referred to as an X-ray CT mixture degree in the present description) obtained by dividing a standard deviation of a density measured value in the X-ray CT by the average value of the density measured value in the X-ray CT turns to 0.2 or less. The material is more preferably mixed until the value turns to 0.1 or less. It is to be noted that, needless to say, the mixed state can be evaluated by means of the X-ray CT mixture degree, even when using the clay formed into a certain shape by use of a vacuum clay kneader or the like.

As described above, the method for manufacturing the honeycomb formed body of the present invention has an effect of uniformly dispersing the constituting components of the forming material, and an effect of crushing the agglomerate formed by agglomerating the fine particles. For example, since microcapsules made of a foamed resin for preferable use as the pore former have small specific gravities, it has heretofore been difficult to uniformly disperse the microcapsules in the forming material. However, according to the method for manufacturing the honeycomb formed body of the present invention, it is possible to uniformly disperse even the constituting components having such small specific gravities.

Therefore, the method for manufacturing the honeycomb formed body of the present invention can be preferably used in using the forming material including the microcapsules made of the foamed resin as the pore former. Such manufacturing method can avoid a phenomenon in which the pore former content of the forming blend (and the clay, honeycomb formed body) fluctuates with the portions, and the method is preferable in that it is possible to obtain the porous honeycomb structure whose porosity does not fluctuate with the portions.

In a case where the method of extrusion-forming the clay by use of the die having slits of a shape which is complementary to that of the partition walls is adopted as a method for forming the clay, it is preferable to use, as the aggregate particulate material, a material containing a powder passed through a sieve whose aperture is 4/5 or less of a slit width of the die. It is more preferable to use a material containing a powder passed through a sieve whose aperture is 1/2 or less of a slit width of the die. When a coarse grain content is removed beforehand from the aggregate particulate material, it is possible to more effectively prevent the generation of the internal defect of the honeycomb formed body (and the porous honeycomb structure).

It is to be noted that the use of the material "containing" the powder passed through the sieve means that the only aggregate particulate material having the coarse grain content may be passed through the sieve, and a particulate material (alumina, aluminum hydroxide or the like) which does not have any coarse grain content does not have to be necessarily passed through the sieve.

(ii) Kneading step
The kneading step is a step of kneading the forming blend (wet powder) obtained by the mixing step to thereby obtain the clay in the method for manufacturing the honeycomb formed body of the present invention.

The kneading can be performed with a conventional known kneader such as a sigma kneader, Bambari mixer, a screw type extrusion kneader or the like.

In the method for manufacturing the honeycomb formed body of the present invention, although not restrictive, the mixing step and the kneading step are performed in individual devices, and the mixer which performs the mixing step is preferably connected directly to the kneader which performs the mixing step. This is because it is possible to reduce a fear that the fine particles agglomerate to form the agglomerate again accompanying transfer.

(iii) clay kneading step
The clay kneading step is a step of forming the clay obtained as described above into a predetermined shape. The shape of the clay is not limited, but a preferable shape is a cylindrical shape.

The clay kneading can be performed with a conventional known kneader such as a screw type extrusion clay kneader. Especially, the use of a clay kneader (so-called vacuum clay kneader) provided with a vacuum or reduced pressure device (e.g., vacuum pump or the like) for deaerating the forming blend (and the clay) is preferable in that it is possible to obtain the clay having few defects and satisfactory formability.

(iv) Forming step
The forming step is a step of forming the clay obtained as described above into a honeycomb structure in which a large cells are partitioned and formed by the partition walls, and drying the clay to thereby obtain a honeycomb formed body.

The "honeycomb structure" mentioned in the present description means a shape in which a large number of cells 3 are partitioned and formed by partition walls 4 as in a porous honeycomb structure 1 shown in, for example, FIG. 2. There is not any restriction on the whole shape of the honeycomb formed body, and examples of the shape include a square pole shape and a triangle pole in addition to the cylindrical shape shown in FIG. 2. There is not any special restriction on a cell shape (cell shape in a second perpendicular to a cell forming direction) of the honeycomb formed body, and examples of the shape include a hexagonal cell and a triangular cell in addition to a quadrangular cell shown in FIG. 2.

There is not any special restriction on the forming method, an a conventional known forming method is usable such as extrusion forming, injection forming or press forming, but above all, the clay obtained as described above is preferably extrusion-formed by use of the die having the slits of the shape complementary to that of the partition walls. According to such method, it is possible to easily obtain the honeycomb formed body having a desired cell shape, partition wall thickness, and cell density.

Moreover, there is not restriction on a configuration of a back hole to introduce the clay into the slit in a case where the die having the slit is used. For example, a die in which back holes are disposed in all other slit intersections may be used, or the extrusion forming may be performed using the die in which the back holes are disposed in all of the intersections of the slits. A more preferable die is provided with the back holes in all of the intersections of the slits. In the die whose back holes are disposed every other intersection, points to which the clay is attached under pressure is the intersection of the cell. Since the clay gathers for four directions and is attached under pressure, the clay is not easily attached under pressure with good balance in a case where fluidity is unsatisfactory. When the balance in attaching the clay under pressure is unsatisfactory, the defects are easily generated in the intersections, and the defects lower an isostatic strength. In a case where the die provided with the back holes in all of the intersections of the slits is used, since the clay is not attached to the intersection under pressure, the drop of the isostatic strength does not easily occur even if the defect is generated.

Furthermore, although not restrictive, it is preferable to use a die in which at least a part of corner portions of a cell block forming the slit is provided with R (provided with a curved surface). A die configured such that all of the corner portions of the cell block is provided with R is more preferably used. When the corner portion of the cell block of the die is provided with R, an area of an intersection portion of the die enlarges, and a flow of the clay becomes better. Therefore, internal defects such as cuts and burrs are not easily formed in the honeycomb formed bodiesince the intersection portion of the honeycomb formed body is reinforced, the strength of the honeycomb formed body is improved, and the isostatic strength can be raised.

When all the intersections of the slits of the die are provided with the back holes, a distance between the back hole and a slit outlet shortens. When the corner portion of the cell block forming the slit is provided with R, the clay flows more smoothly. Therefore, even if the agglomerate enters the die, the flow of the clay including the agglomerate is satisfactorily retained, and the agglomerates are not easily accumulated in the die. When the agglomerates are temporarily accumulated in the die, the flow of the clay therein deteriorates, thereby deteriorating a clay pressurized attaching property, and this generates cuts in the partition walls during the forming, or those in the partition walls during the drying or firing. According to the die in which the back holes are disposed in all of the intersections of the slits, and the corner portion of the cell block forming the slit is provided with R, the generation of these problems can be inhibited.

There is not any restriction on a device which performs the extrusion forming, and the forming can be performed with a conventional known extrusion former (e.g., ram type extrusion former or the like). Above all, a biaxial continuous former is preferably used. The biaxial continuous former is preferable as compared with another extrusion former in that it is possible to obtain a uniform formed article.

Moreover, the above-described kneading step is preferably integrally and continuously performed together with the forming step. This is because the kneading step can be performed integrally with the forming step, and productivity is superior. Examples of the kneading former which realizes such step include a biaxial continuous kneading extrusion former

It is to be noted that when the extrusion forming is carried out, the clay is preferably passed through the sieve whose aperture is 160 to 278 µm before extruded from the die. In this case, even if the agglomerate cannot be crushed in the above-described mixing step, the agglomerate can be removed, and it is therefore possible to more securely prevent the generation of the internal defect of the honeycomb formed body (and the porous honeycomb structure). When the aperture of the sieve is less than the above-described range, the sieve is unfavorably easily broken. When the above-described range is exceeded, it unfavorably becomes difficult to remove the agglomerate, and there is a fear that the generation of the internal defect of the honeycomb formed body (and the porous honeycomb structure) cannot be prevented.

There is not any special restriction on a drying method, and a conventional known drying method is usable such as hot air drying, microwave drying, dielectric drying, drying under reduced pressure, vacuum drying, or freezing drying. However, a drying method of the hot air drying combined with the microwave drying or the dielectric drying is preferable in that the whole honeycomb formed body can be quickly and uniformly dried.

(2) Method for manufacturing honeycomb filter
A method for manufacturing a honeycomb filter herein described: obtains a honeycomb formed body by the above-described method for manufacturing the honeycomb formed body; fires the honeycomb formed body to thereby obtain a porous honeycomb structure; alternately plugs one opening and the other open portions of a large number of cells of the porous honeycomb structure to thereby obtain a plugged honeycomb structure; and fires the plugged honeycomb structure to thereby obtain the honeycomb filter constituted so that foreign matters are trapped by partition walls, when a fluid to be treated introduced into a part of the cells passes through the porous partition wall to flow into the adjacent cell. Since such manufacturing method uses the honeycomb formed body having few internal defects and high strength, it is possible to manufacture the honeycomb filter superior in filtering performance (trapping efficiency).

There is not any special restriction on a method of alternately plugging the one opening and the other opening of a large number of cells of the porous honeycomb structure, but examples of the method include a method of: attaching an adhesive sheet to one end of the porous honeycomb structure; making a hole in an only portion corresponding to the cell to be plugged of the adhesive sheet by means of laser working utilizing image processing to obtain a mask; immersing the end of the porous honeycomb structure to which the mask is attached into a ceramic slurry; filling the cell to be plugged of the porous honeycomb structure with the ceramic slurry to form plugged portions; performing a similar step on the other end of the porous honeycomb structure; and thereafter drying and firing the plugged portions.

The ceramic slurry can be prepared by mixing at least an aggregate particulate material and a dispersion medium (e.g., water or the like). If necessary, an additive such as a binder or a dispersant may be added. There is not any special restriction on a type of the aggregate particulate material, but the same aggregate particulate material as that for use as a raw material of the honeycomb formed body can be preferably used. As the binder, a resin such as polyvinyl alcohol or methyl cellulose is preferably used. As the dispersant, a special carboxylic acid type polymer surfactant is preferably used.

Viscosity of the ceramic slurry is adjusted into a range of preferably 5 to 50 Pa·s, more preferably 10 to 30 Pa·s. When the viscosity of the ceramic slurry is excessively low, a kink defect tends to be easily generated. The viscosity of the slurry can be adjusted depending on, for example, a ratio between the aggregate particulate material and the dispersion medium (e.g., water or the like), an amount of the dispersant or the like.

The firing means an operation for sintering and densifying the aggregate particulate material to secure a predetermined strength. Since firing conditions (temperature/time) differ with the type of the constituting aggregate particulate material during both of the firing of the honeycomb formed body and the firing of plugging portions, appropriate conditions may be selected depending on the type of the aggregate particulate material for use. For example, when the cordierite forming material is used as the aggregate particulate material, it is preferable to fire the material at a temperature of 1410 to 1440°C for three to seven hours. When the firing conditions (temperature/time) are less than the above-described range, there is unfavorably a fear that the aggregate particulate material is insufficiently sintered. When the above-described range is exceeded, there is unfavorably a fear that generated cordierite melts.

It is to be noted that when an operation (calcining) is performed to burn and remove organic matters (binder, pore former, dispersant, etc.) in the honeycomb formed body or the plugging portions before the firing or in a process of firing temperature rise, the removal of the organic matters can be preferably promoted. Since a burning temperature of the binder is about 200°C, and that of the pore former is about 300°C, the calcining temperature may be set to about 200 to 1000°C. The calcining time is not especially limited, but is usually about ten to 100 hours.

Moreover, the honeycomb filter may be manufactured by a method of: obtaining a honeycomb formed body by the above-described method for manufacturing the honeycomb formed body; alternately plugging one opening and the other opening of each of a large number of cells of the honeycomb formed body to thereby obtain a plugged honeycomb formed body; and firing the plugged honeycomb formed body to obtain the honeycomb filter constituted so that foreign matters are trapped by partition walls, when a fluid to be treated introduced into a part of the cells passes through the porous partition wall to flow into the adjacent cell.

Since the above-described manufacturing method uses the honeycomb formed body having few internal defects and high strength in the same manner as in the above manufacturing method, it is possible to manufacture the honeycomb filter superior in the filtering performance (trapping efficiency). In addition, the firing of the honeycomb formed body and that of the plugging portions can be performed at the same time. Therefore, there is an advantage that firing operations can be reduced and that the honeycomb filter can be obtained more easily. It is to be noted that the plugging and the firing in this manufacturing method can be performed in the same manner as in the above method.

(3) Honeycomb filter
A honeycomb filter made using the present invention comprises: a porous honeycomb structure having a large number of cells formed by partitioning the structure by porous partition walls; and plugging portions which alternately plug one opening and the other opening of a large number of cells. The filter is constituted so that foreign matters are trapped by partition walls, when a fluid to be treated introduced into a part of the cells passes through the partition wall to flow into the adjacent cell. The filter may be **characterized in that** a soot leak cell ratio evaluated by a soot printing test is 1 cell/1000 cells or less.

The "soot printing test" mentioned in the present invention is a method of: poring particles into the cells from one end of the honeycomb filter; and inspecting the internal defect of the honeycomb filter by means of images of the particles trapped by a breathable sieve closely attached to the other end (see, e.g., Japanese Patent Application Publication No. 5-658).

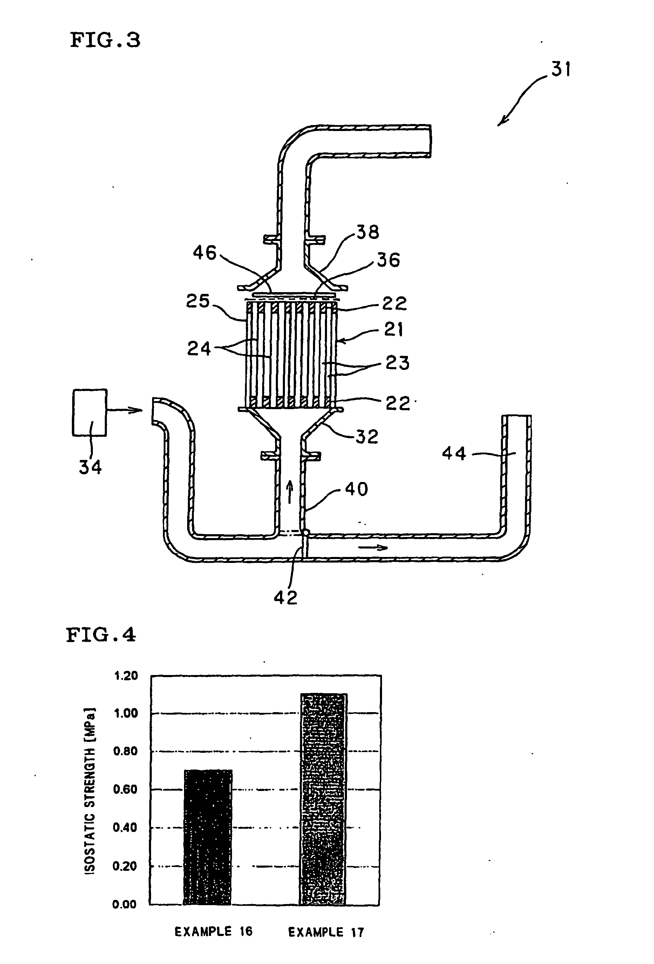

The soot printing test can be performed by use of an inspection device 31 constituted of: a support base 32; a soot generator 34 connected to the support base 32 to supply a gas containing graphite particles; a sieve 36 which traps the graphite particles; and an air exhaust tube 38 which recovers the gas passed through the sieve 36 as shown in FIG. 3. It is to be noted that reference numeral 40 denotes an air supply pipe, 42 denotes a changeover valve, 44 denotes an air exhaust pipe, and 46 denotes a presser mesh.

That is, the honeycomb filter is laid on the support base 32, the sieve 36 is closely attached to an upper end of the honeycomb filter, thereafter the air exhaust tube 38 is set from above the sieve 36, and the honeycomb filter and the sieve 36 are fixed in a state in which they are sandwiched between the support base 32 and the air exhaust tube 38. In this state, the gas containing the graphite particles supplied from the soot generator 34 is poured from one end of the honeycomb filter 21 into the cells 23, and the images of the graphite particles trapped by the breathable sieve 36 closely attached to the other end are observed.

In a case where there is not any internal defect in the partition walls 24 of the honeycomb filter 21, since the graphite particles are trapped by the partition walls 24 of the honeycomb filter 21, the images of the graphite particles are not formed in the sieve 36. On the other hand, when the internal defects exist in the partition walls 24 or the like of the honeycomb filter 21, the graphite particles pass through the partition walls 24 of the honeycomb filter 21 to flow into the adjacent cells 23, and are trapped by the sieve 36, so that the images of the graphite particles are formed in the sieve 36.

A ratio obtained by converting the number of the cells provided with the images of the graphite particles formed in the sieve into the number of the cells per 1000 cells after performing the above-described inspection is a soot leak cell ratio. In the honeycomb filter of the present invention, the soot leak cell ratio of about 2 to 20 cells/1000 cells in the conventional honeycomb filter has been improved up to a level of 1 cell/1000 cells or less. Such honeycomb filter has few internal defects and superior filtering performance (trapping efficiency).

It is to be noted that in the honeycomb filter of the present invention, at least the porous honeycomb structure (i.e., portions other than the plugging portions) is preferably made of cordierite. Cordierite having a small thermal expansion coefficient is superior in resistance to thermal shock, and is preferably capable of effectively preventing the generation of cracks due to a thermal stress.

(Examples) The present invention will be described hereinafter in accordance with examples in more detail, but the present invention is not limited to these examples. It is to be noted that as to an average particle diameter described in the following examples and comparative examples, there was used a value of a 50% particle diameter measured with an X-ray transmission type grain size distribution measurement device (e.g., trade name: Sedigraph model 5000-02,s manufactured by Shimadzu Corp., etc.) in which Stoke's liquid phase sedimentation method was used as a measurement principle, and detection was performed by an X-ray transmission method.

### (Example 1)

### [Manufacturing of honeycomb formed body]

(Forming material) As an aggregate particulate material, a cordierite forming material was prepared which was mixed at a ratio of: 40% by mass of talc (average particle diameter of 21 µm); 18.5% by mass of kaolin (average particle diameter of 11 µm); 14.0% by mass of alumina (average particle diameter of 7 µm); 15% by mass of aluminum hydroxide (average particle diameter of 2 µm); and 12.5% by mass of silica (average particle diameter of 25 µm). With respect to 100 parts by mass of the above-described aggregate particulate material, there were prepared: 25.0 parts by mass of carbon (cokes: average particle diameter of 27 µm) as a first pore former; 10.0 parts by mass of a polyethylene terephthalate resin (average particle diameter of 37 µm) as a second pore former; and 8.0 parts by mass of hydroxypropyl methyl cellulose as a binder. Furthermore, there were prepared: 0.01 part by mass of fatty acid soap (potassium laurate) as a dispersant (surfactant); and 35 parts by mass of water as a dispersion medium.

(Mixing step: first mixing) A pot mill was used as a mixer, the first and second pore formers were added to the above-described aggregate particulate material, and these materials were mixed for ten minutes to obtain a forming blend (dry powder). It is to be noted that a rotation number of the pot mill was set to 40 rpm.

(Evaluation by agglomerate on sieve) The resultant forming blend (dry powder) was removed from the pot mill, 100 g of the blend was sieved with a sieve having an aperture of 500 µm, a mass of residue (agglomerate) on the sieve was measured to obtain a ratio (% by mass) of the residue on the sieve, and the mixed state was evaluated. Results are shown in Table 1.

[Table 1]

| Test No. | Mixture degree evaluation | | | Product evaluation | |
|---|---|---|---|---|---|
| | Agglomerate on sieve (% by mass) | TG mixture degree | X-ray CT mixture degree | Soot cell ratio cell ratio (1/1000) | leak Isostatic strength |
| Example 1 | 0.0 | 0.05 | 0.09 | 0.2 | 1.9 |
| Example 2 | 0.0 | 0.03 | 0.05 | 0.1 | 1.8 |
| Example 3 | 0.0 | 0.02 | 0.03 | 0.0 | 2.3 |
| Example 4 | 0.0 | 0.01 | 0.02 | 0.0 | 2.1 |
| Example 5 | 0.0 | 0.01 | 0.02 | 0.0 | 2.2 |
| Example 6* | - | 0.03 | 0.05 | 0.0 | 2.5 |
| Example 7 | 0.0 | 0.02 | 0.03 | 0.0 | 2.2 |
| Example 8 | 1 | 0.20 | 0.34 | 1.0 | 1.1 |
| Example 9 | 0.07 | 0.08 | 0.14 | 0.2 | 1.5 |
| Example 10 | 0.0 | 0.03 | 0.05 | 0.0 | 2.3 |
| Example 11 | 0.1 | 0.05 | 0.09 | 0.1 | 1.9 |
| Example 12 | 0.0 | 0.03 | 0.05 | 0.0 | 2.2 |
| Example 13 | 0.2 | 0.12 | 0.20 | 0.3 | 1.4 |
| Example 14 | 0.05 | 0.06 | 0.10 | 0.1 | 1.8 |
| Example 15 | 0.07 | 0.07 | 0.12 | 0.9 | 1.0 |
| Comparative Example 1 | 5.0 | 0.60 | 1.02 | 4.0 | 0.7 |
| Comparative Example 2 | - | - | - | - | - |
| Comparative Example 3 | 1.5 | 0.30 | 0.51 | 1.5 | 0.9 |
| Comparative Example 4 | 3 | 0.50 | 0.85 | 1.9 | 0.8 |

| | | | | | |
|---|---|---|---|---|---|
| *Reference example, not within the invention | | | | | |

(Mixing step: second mixing) Next, an mixed solution of the dispersant and the dispersion medium was sprayed and added into the above-described pot mill (mixer), and similarly mixed for two minutes to obtain a forming blend (wet powder).

(Evaluation by TG mixture degree) 20 mg of the resultant forming blend (wet powder) was taken out of the pot mill, and mass decreases of the binder, raw material crystal water and the like were measured with a thermogravimeter (TG) ten times. In each of ten measurements, a ratio of a mass decreased from an original mass was obtained as a mass decrease ratio, a value (TG mixture degree) was obtained by dividing a standard deviation of the mass decrease ratio by an average value of the mass decrease ratio, and the mixed state was evaluated. Results are shown in Table 1.

(Kneading step, mixing step) Next, the resultant forming blend (wet powder) was kneaded with a sigma kneader, and further kneaded with a screw type extrusion kneader (vacuum kneader) provided with a vacuum reduced pressure device to obtain a clay extruded into a cylindrical shape (outer diameter of 300 mmφ).

(Evaluation by X-ray CT mixture degree) A density of the resultant cylindrical clay was measured as to ten portions by use of an X-ray CT, a value (X-ray CT mixture degree) was obtained by dividing the standard deviation of the ten density measured values by the average value of the density measured values by the X-ray CT, and the mixed state of the raw materials was evaluated. Results are shown in Table 1. It is to be noted that a measurement unit of the X-ray CT measurement was 1 mm x 1 mm x 2 mm.

(Forming Step) Next, as a die, there was used a die having slits of a shape complementary to that of partition walls of the honeycomb formed body and in which back holes were disposed in all intersections of slits and in which corner portions of cell blocks constituting the cells were subjected to R-working (provided with curvatures), and a ram type extrusion former was used as a forming machine. Extrusion forming was performed, and a formed material provided with a large number of cells partitioned by partition walls was obtained from the resultant clay. In this case, a sieve having an aperture of 233 µm was disposed in the ram type extrusion former, and the clay was passed through this sieve and extruded from the die. This formed material was dielectrically dried, dried with hot air, and completely dried to obtain a honeycomb formed body. Opposite ends of this honeycomb formed body were cut into a predetermined dimension.

As to the resultant honeycomb formed body, an end (cell opening surface) shape was a circular shape having an outer diameter of 229 mmφ, a length was 254 mm, a cell shape was a 1.16 mm x 1.16 mm square cell, a thickness of each partition wall was 300 µm, a cell density was about 300 cells/square inch (46.5 cells/cm²), and a total cell number was 19085 cells.

[Manufacturing of honeycomb filter]
One opening and the other opening of each of a large number of cells of the honeycomb formed body obtained as described above were alternately plugged to obtain a plugged honeycomb formed body. As a plugging method, there was adopted a method of: attaching an adhesive sheet to one end of the honeycomb formed body; making a hole in an only portion corresponding to the cell to be plugged of the adhesive sheet by means of laser working utilizing image processing to obtain a mask; immersing the end of the honeycomb formed body to which the mask is attached into a ceramic slurry; and filling the cell to be plugged of the honeycomb formed body with the ceramic slurry to form plugged portions.

As the ceramic slurry, there was used a slurry prepared by: using the same aggregate particulate material as that of the honeycomb formed body; and adding, to 100 parts by mass of the aggregate particulate material, 0.5 part by mass of methyl cellulose as a binder, 0.3 part by mass of a special carboxylic acid type polymer surfactant as a dispersant (trade name: Poise 530, manufactured by Kao Corp.), and 50 parts by mass of water as a dispersion medium to mix them for 30 minutes. The viscosity was 25 Pa·s.

After completely drying the plugged honeycomb formed body obtained as described above by performing hot air drying, the plugged honeycomb formed body was fired at a temperature of 1420°C for seven hours to thereby obtain a honeycomb filter constituted so that foreign matters were trapped by the partition walls, when a fluid to be treated introduced into a part of the cells passed through the porous partition wall to flow into the adjacent cell.

(Evaluation by soot printing test) As to the resultant honeycomb filter, a soot leak cell ratio was calculated in the soot printing test, and a degree of the internal defect of the honeycomb filter, that is, the filtering performance (trapping efficiency) of the filter was evaluated.

The soot printing test was performed using an inspection device in conformity with a method described in Japanese Patent Application Publication No. 5-658. As shown in FIG. 3, the inspection device is constituted of: a support base 32 which supports a honeycomb filter 21 in a state in which a peripheral edge portion of the filter is air-tightly sealed; a soot generator 34 connected to the support base 32 to supply a gas containing graphite particles; a sieve 36 (using white cloth) which traps the graphite particles; and an air exhaust tube 38 which recovers the gas passed through the sieve 36.

First, the honeycomb filters 21 of Example 1 and Comparative Example 1 described above were laid on the support base 32, the air exhaust tube 38 was set on an upper end of each honeycomb filter 21, and each honeycomb filter 21 was fixed in a state in which the honeycomb filter 21 was sandwiched between the support base 32 and the air exhaust tube 38. In this state, the gas containing the graphite particles supplied from the soot generator 34 by an amount of about 70 g/hour was poured from one end of the honeycomb filter 21 into the cells, and soot having an amount of 5 g/liter was deposited on the honeycomb filter 21.

Next, after closely attaching the sieve 36 to the upper end of the honeycomb filter 21, the air exhaust tube 38 was again set from above the sieve 36, and the honeycomb filter 21 and the sieve 36 were fixed in a state in which they were sandwiched between the support base 32 and the air exhaust tube 38. In this state, the gas containing the graphite particles supplied from the soot generator 34 by an amount of about 70 g/hour was poured from one end of the honeycomb filter 21 into the cells 23, images (i.e., black points) of the graphite particles trapped by the breathable sieve 36 closely attached to the other end were observed, and the number of the images were counted.

(Evaluation by isostatic strength test) The resultant honeycomb filter was subjected to an isostatic strength test in conformity with Car Standard JASO Standard M505-87 of Society of Automotive Engineers of Japan. This test is a test to dispose a sample (honeycomb filter) in a rubber cylindrical container, cover a container with a lid of an aluminum-made plate, and perform isotropic pressurizing compression in water, and the test imitates a compressive load application in a case where an outer peripheral surface of the honeycomb filter is grasped in a can member of a converter. A test result is shown as an applied pressure value at a time when each honeycomb filter is broken. Results are shown in Table 1.

(Examples 2, 3)
Honeycomb formed bodies were manufactured in the same manner as in Example 1 except that a ratio of a surfactant in a forming material was set to 0.1 part by mass (Example 2) and 1 part by mass (Example 3), honeycomb filters were manufactured from the resultant honeycomb formed bodies, and evaluations were performed in these processes. Results are shown in Table 1.

(Example 4)
A honeycomb formed body was manufactured in the same manner as in Example 1 except that a forming material of aluminum hydroxide whose surface was modified with a stearic acid was used, and a ratio of a surfactant in a forming material was set to 0.1 part by mass, a honeycomb filter was manufactured from the resultant honeycomb formed body, and evaluations were performed in these processes. Results are shown in Table 1.

(Example 5)
A honeycomb formed body was manufactured in the same manner as in Example 1 except that a forming material of aluminum hydroxide from which agglomerates were removed beforehand by performing classification with a free eddy type centrifugal classifier was used, and a ratio of a surfactant in a forming material was set to 0.1 part by mass, a honeycomb filter was manufactured from the resultant honeycomb formed body, and evaluations were performed in these processes. Results are shown in Table 1.

(Example 6) (Reference example)
A honeycomb formed body was manufactured in the same manner as in Example 1 except that a pot mill was used, and first and second pore formers were added to an aggregate particulate material excluding aluminum hydroxide, and mixed for five minutes to obtain a forming blend (dry powder) in a mixing step (first mixing), and a ratio of a surfactant (dispersant) in a forming material was set to 0.1 part by mass, and aluminum hydroxide was added to a mixed solution of the dispersant and a dispersion medium, dispersed with ultrasonic waves, added into the pot mill, and mixed for five minutes to thereby obtain a forming blend (wet powder) in a mixing step (second mixing). A honeycomb filter was manufactured from the resultant honeycomb formed body, and evaluations were performed in these processes. Results are shown in Table 1.

(Example 7)
A honeycomb formed body was manufactured in the same manner as in Example 1 except that a ratio of a surfactant (dispersant) in a forming material was set to 1 part by mass, and kneading and forming were integrally and continuously performed using a biaxial continuous kneading extrusion former in a kneading step and a forming step. A honeycomb filter was manufactured from the resultant honeycomb formed body, and evaluations were performed in these processes. Results are shown in Table 1.

(Examples 8 to 13)
Honeycomb formed bodies were manufactured in the same manner as in Example 1 except that a mixer in a mixing step was changed, a honeycomb filter was manufactured from the resultant honeycomb formed body, and evaluations were performed in these processes. Results are shown in Table 1. It is to be noted that in Example 8, materials were mixed using Super Mixer (manufactured by Kabushiki Kaisha Kawata), a rotation number of a stirring blade was set to 500 rpm, and a peripheral speed was set to 2 m/second. In example 9, the materials were mixed using High Speeder (manufactured by Pacific Machinery & Engineering Co., Ltd.) at a stirring blade rotation number of 700 rpm and a peripheral speed of 6 m/second. In Example 10, the materials were mixed using an ultrahigh speed shearing omni mixer (manufactured by Chiyoda Giken Kogyo Kabushiki Kaisha) at a stirring blade rotation number of 4000 rpm and a peripheral speed of 10 m/second. In Example 11, the materials were mixed using a kneading/high-speed stirring granulator (manufactured by DALTON Co.) at a stirring blade rotation number of 1000 rpm and a peripheral speed of 7 m/second. In Example 12, the materials were mixed using a vertical granulator (manufactured by Kabushiki Kaisha Powrex) at a stirring blade rotation number of 5000 rpm and a peripheral speed of 9 m/second. In Example 13, the materials were mixed using Henschel mixer (trade name: Mitsui Henschel Mixer, manufactured by Mitsui Mining Co., Ltd.) at a stirring blade rotation number of 600 rpm and a peripheral speed of 4.5 m/second.

(Example 14)
Among forming materials, an amount of a first pore former (carbon) was set to 5.0 parts by mass with respect to 100 parts by mass of an aggregate particulate material, acryl resin based microcapsules (average particle diameter of 50 µm) were used as a second pore former, this amount was set to 2.2 parts by mass with respect to 100 parts by mass of the aggregate particulate material, and an amount of a dispersant (surfactant) for the forming material was set to 0.1 part by mass. As a mixer, a ploughshare mixer (trade name: Ploughshare Mixer, manufactured by Pacific Machinery & Engineering Co., Ltd.) was used. In a mixing step, the first pore former (carbon) and a binder were added to the aggregate particulate material, and mixed for three minutes. Furthermore, the second pore former was added, and mixed for three minutes. It is to be noted that as to stirring conditions of the ploughshare, a rotation number of a ploughshare driving shaft was set to 100 rpm, a rotation number of a chopper driving shaft was set to 3000 rpm, and a peripheral speed of the chopper driving shaft was set to 40 m/second. A honeycomb formed body was manufactured in the same manner as in Example 1 except the above-described conditions, a honeycomb filter was manufactured from the resultant honeycomb formed body, and evaluations were performed in these processes. Results are shown in Table 1.

(Example 15)
A honeycomb formed body was manufactured in the same manner as in Example 1 except that a mixer was changed in a mixing step, and as a die in a forming step, there was used a die having slits of a shape complementary to that of partition walls of a honeycomb formed body and which was provided with back holes every other slit intersection and in which corner portions of cell blocks constituting cells were not subjected to R-working. A honeycomb filter was manufactured from the resultant honeycomb formed body, and evaluations were performed in these processes. Results are shown in Table 1. It is to be noted that the used mixer was High Speeder (manufactured by Pacific Machinery & Engineering Co., Ltd.), a rotation number of a stirring blade was set to 700 rpm, and a peripheral speed was set to 20 m/second to perform the mixing.

(Comparative Example 1)
A honeycomb formed body was manufactured in the same manner as in Example 1 except that an amount of a dispersant (surfactant) of a forming material was set to 0.1 part by mass, and materials were mixed by use of a sigma kneader as a mixer, a honeycomb filter was manufactured from the resultant honeycomb formed body, and evaluations were performed in these processes. Results are shown in Table 1.

(Comparative Example 2)
A honeycomb formed body was manufactured in the same manner as in Example 1 except that a ratio of a surfactant in a forming material was set to 2 parts by mass, a honeycomb filter was manufactured from the resultant honeycomb formed body, and attempts were made to perform evaluations in these processes. However, a wet powder came into an agglomerate state in a pot mill, could not be taken out, and could not be formed, and any filter could not be obtained.

(Comparative Examples 3, 4)
Honeycomb formed bodies were manufactured in the same manner as in Example 1 except that a mixer was changed in a mixing step, honeycomb filters were manufactured from the resultant honeycomb formed bodies, and evaluations were performed in these processes. Results are shown in Table 1. It is to be noted that in Comparative Example 3, materials were mixed using Nauter Mixer (manufactured by Hosokawa Micron Co., Ltd.) at a stirring blade rotation number of 300 rpm and a peripheral speed of 1.5 m/second. In Comparative Example 4, materials were mixed using a ribbon mixer (manufactured by DALTON Co.) at a stirring blade rotation number of 100 rpm and a peripheral speed of 0.5 m/second.

(Example 16)
Ten honeycomb formed bodies each of whose end (cell opening surface) shape was a circular shape having an outer diameter of 129 mmφ and each of which had a length of 152.4 mm were prepared by use of a die in which back holes for introducing clay into slits were disposed every other slit intersection in conformity with a manufacturing procedure of the honeycomb formed body of Example 1. As target values of a cell structure, a thickness of each partition wall was set to 306 µm (12 mil), and a cell density was set to about 200 cells/square inch (cpsi). Thereafter, the respective articles plugged, dried, and fired in conformity with a procedure for manufacturing the honeycomb filter in Example 1 to obtain ten honeycomb filters (sample Nos. 1 to 10). A cell structure of the honeycomb filter was actually measured, and the thickness of the partition wall was 313.65 µm (12.3 mil), and a cell density was about 197 cells/square inch (cpsi) on average.

(Evaluation by isostatic strength test) The resultant ten samples were subjected to an isostatic strength test in conformity with Car Standard JASO Standard M505-87 issued by Society of Automotive Engineers of Japan. Results of Example 2 are shown in Table 2, and an average value of ten samples is shown in FIG. 4.

(Example 17)
Ten honeycomb filters (sample Nos. 1 to 10) were prepared in the same manner as in Example 16 except that there was used a die in which back holes for introducing clay into slits are disposed in all slit intersections, and were subjected to isostatic strength tests, respectively. It is to be noted that when a cell structure was actually measured, a thickness of each partition wall was 311.1 µm (12.2 mil), and a cell density was about 29.6 cells/cm² (191 cells/square inch (cpsi)). Results of Example 3 in the isostatic strength test are shown in Table 2, and an average value of ten samples is shown in FIG. 4.

[Table 2]

| | Sample No. | Example 16 | Example 17 |
|---|---|---|---|
| Isostatic strength [MPa] | 1 | 0.7 | 1.0 |
| | 2 | 0.7 | 1.1 |
| | 3 | 0.6 | 1.3 |
| | 4 | 0.7 | 1.1 |
| | 5 | 0.8 | 1.3 |
| | 6 | 0.8 | 1.1 |
| | 7 | 0.8 | 1.1 |
| | 8 | 0.7 | 0.9 |
| | 9 | 0.6 | 1.0 |
| | 10 | 0.6 | 1.1 |
| | Ave | **0.70** | **1.10** |
| | Max | 0.8 | 1.3 |
| | Min | 0.6 | 0.9 |
| | σ | **0.08** | **0.12** |
| | N | 10 | 10 |

(Considerations)
From the results of Table 1, the honeycomb filters of Examples 1 to 15 have a soot leak cell ratio of 1.0 cell/1000 cells or less, and have few internal defects and superior filtering performance (trapping efficiency). On the other hand, the honeycomb filters of Comparative Examples 1 to 4 have a ratio of 1.5 cells/1000 cells or more, not a few internal defects exist, and the filtering performance (trapping efficiency) is insufficient.

It is to be noted that as to the honeycomb filters of Example 1 and Comparative Example 1, each portion which caused soot leak was cut and observed. In the honeycomb filter of Example 1, some small holes having a hole diameter of about 0.5 mm were observed, and a degree of the internal defect was a tolerable level. However, in the honeycomb filter of Comparative Example 1, not a few burrs or cuts having a length of about 10 to 100 mm were observed, and the degree of the internal defect exceeded the tolerable level.

From the results shown in Table 2 and FIG. 4, it is seen that a minimum value of Example 17 is not below a maximum value of Example 16, and an average value of Example 17 is improved by about 57% as compared with Example 16. It has been confirmed that when the die provided with the back holes in all the slit intersections is used, the isostatic strength of the honeycomb filter is improved as compared with a case where the die provided with the back hole every other slit intersection.

### Industrial Applicability

A method for manufacturing a honeycomb formed body of the present invention can be preferably used in manufacturing a honeycomb filter having few internal defects, high strength, and superior filtering performance (trapping efficiency). The honeycomb filter obtained using the present invention can be preferably used as a dust collecting and water treating filter for use in an environmental measure such as pollution prevention and an application such as product recovery from a high-temperature gas, especially as a diesel particulate filter which traps fine particles discharged from a diesel engine.

## Claims

1. A method for manufacturing a honeycomb formed body by use of a forming material including water and aggregate particulate materials, the aggregate particulate materials including two or more types of aggregate particulate material each having an average particle diameter of 10 µm or less, the method comprising
(i) a first mixing step of mixing the aggregate particulate materials in a mixer to thereby obtain a forming blend of dry powder;
(ii) adding water to the forming blend of dry powder and mixing them to thereby obtain a forming blend of wet powder;
(iii) a kneading step of kneading the forming blend of wet powder to obtain a clay;
wherein the first mixing step mixes the materials with crushing by the mixer of agglomerate formed by agglomerating of fine particles in the aggregate particulate materials, so as to inhibit generation of an agglomerate, the mass of agglomerate remaining on the sieve after sieving the forming blend of dry powder with a sieve having an aperture of 500 µm being 1% by mass or less, and
the method further comprising forming the clay obtained in this manner into a honeycomb structure in which a large number of cells are partitioned and formed by partition walls, and drying the formed clay to obtain the honeycomb formed body.

2. The method for manufacturing the honeycomb formed body according to claim 1, wherein the surface of the aggregate particulate material is coated before the mixing step.

3. The method for manufacturing the honeycomb formed body according to claim 1 or 2, wherein the aggregate particulate material is classified beforehand to remove an agglomerate before the mixing step.

4. The method for manufacturing the honeycomb formed body according to any one of claims 1 to 3, wherein when water is added, a surfactant is further added as a dispersant.

5. The method for manufacturing the honeycomb formed body according to any one of claims 1 to 4, wherein in the mixing step, the mixing is carried out while pressurizing vibration is applied to the forming material.

6. The method for manufacturing the honeycomb formed body according to claim 5, wherein the pressurizing vibration is generated by ultrasonic waves.

7. The method for manufacturing the honeycomb formed body according to claim 5, wherein the pressurizing vibration is generated by containing the forming material and pebbles in a container, and vibrating the container.

8. The method for manufacturing the honeycomb formed body according to any one of claims 1 to 4, wherein the mixing step is performed using a mixer having a stirring blade, and
the mixing is carried out by rotating the stirring blade to stir the forming material while applying a shearing force to the forming material.

9. The method for manufacturing the honeycomb formed body according to any one of claims 1 to 8, wherein the mixing step and the kneading step are performed with individual devices, respectively, and
a mixer which performs the mixing step is directly connected to a kneader which performs the kneading step.

10. The method for manufacturing the honeycomb formed body according to any one of claims 1 to 9, wherein as the aggregate particulate material, there is used a cordierite forming material which contains alumina (Al₂O₃) fine particles having an average particle diameter of 10 µm or less and/or aluminum hydroxide (Al(OH)₃) fine particles having an average particle diameter of 10 µm or less.

11. The method for manufacturing the honeycomb formed body according to any one of claims 1 to 10, wherein when the water is added, it is added while being sprayed.

12. The method for manufacturing the honeycomb formed body according to any one of claims 1 to 11, wherein the forming is extrusion forming by use of a die having slits of a shape complementary to that of partition walls.

13. The method for manufacturing the honeycomb formed body according to claim 12, wherein as the aggregate particulate material, there is used a material containing a powder passed through a sieve whose aperture is 4/5 or less of a slit width of the die.

## Patentansprüche

1. Verfahren zur Herstellung eines Wabenformkörpers unter Verwendung eines Formmaterials, das Wasser und aggregierte teilchenförmige Materialien umfasst, wobei das aggregierte teilchenförmige Material zwei oder mehrere Arten aggregierter teilchenförmiger Materialien umfasst, die jeweils einen mittleren Teilchendurchmesser von 10 µm oder weniger aufweisen, wobei das Verfahren Folgendes umfasst:
(i) einen ersten Mischschritt, in dem die aggregierten teilchenförmigen Materialien in einer Mischvorrichtung vermischt werden, um **dadurch** ein Formgemisch aus einem trockenen Pulver zu erhalten;
(ii) das Zusetzen von Wasser zu dem Formgemisch aus trockenem Pulver und das Vermischen, um **dadurch** ein Formgemisch aus feuchtem Pulver zu erhalten;
(iii) einen Knetschritt, in dem das Formgemisch aus feuchtem Pulver geknetet wird, um ein Tonmaterial zu erhalten;
worin in dem ersten Mischschritt die Materialien unter Aufbrechen des durch die Agglomeration von Feinteilchen in den aggregierten teilchenförmigen Materialien gebildeten Agglomerats durch die Mischvorrichtung vermischt werden, um das Entstehen eines Agglomerats zu verhindern, wobei die Agglomeratmasse, die nach dem Sieben des Formgemischs aus trockenem Pulver mit einem Sieb mit Öffnungen von 500 µm auf dem Sieb zurückbleibt, 1 Gew.-% oder weniger beträgt, und
wobei das Verfahren ferner das Formen des auf diese Weise erhaltenen Tonmaterials zu einer Wabenstruktur, in der eine große Anzahl an Zellen durch Trennwände geteilt und ausgebildet wird, und das Trocknen des geformten Tonmaterials umfasst, um den Wabenformkörper zu erhalten.

2. Verfahren zur Herstellung eines Wabenformkörpers nach Anspruch 1, worin die Oberfläche des aggregierten teilchenförmigen Materials vor dem Mischschritt beschichtet wird.

3. Verfahren zur Herstellung eines Wabenformkörpers nach Anspruch 1 oder 2, worin das aggregierte teilchenförmige Material vorab gesiebt wird, um Agglomerate vor dem Mischschritt zu entfernen.

4. Verfahren zur Herstellung eines Wabenformkörpers nach einem der Ansprüche 1 bis 3, worin, wenn Wasser zugesetzt wird, ferner ein Tensid als Dispersionsmittel zugesetzt wird.

5. Verfahren zur Herstellung eines Wabenformkörpers nach einem der Ansprüche 1 bis 4, worin das Mischen in dem Mischschritt durchgeführt wird, während das Formmaterial Druckvibrationen ausgesetzt ist.

6. Verfahren zur Herstellung eines Wabenformkörpers nach Anspruch 5, worin die Druckvibrationen durch Ultraschallwellen erzeugt werden.

7. Verfahren zur Herstellung eines Wabenformkörpers nach Anspruch 5, worin die Druckvibrationen **dadurch** erzeugt werden, dass das Formmaterial und Kieselsteine in einen Behälter gefüllt werden und der Behälter in Vibration versetzt wird.

8. Verfahren zur Herstellung eines Wabenformkörpers nach einem der Ansprüche 1 bis 4, worin der Mischschritt unter Verwendung einer Mischvorrichtung mit einer Rührschaufel durchgeführt wird und
das Mischen durch das Drehen der Rührschaufel erfolgt, um das Formmaterial zu verrühren, während eine Scherkraft auf das Formmaterial wirkt.

9. Verfahren zur Herstellung eines Wabenformkörpers nach einem der Ansprüche 1 bis 8, worin der Mischschritt und der Knetschritt jeweils in separaten Vorrichtungen durchgeführt werden und
eine Mischvorrichtung, in der der Mischschritt durchgeführt wird, direkt mit einer Knetvorrichtung verbunden ist, in der der Knetschritt durchgeführt wird.

10. Verfahren zur Herstellung eines Wabenformkörpers nach einem der Ansprüche 1 bis 9, worin als das aggregierte teilchenförmige Material ein Cordieritformmaterial verwendet wird, das Aluminiumoxid- (Al₂O₃-) Feinteilchen mit einem mittleren Teilchendurchmesser von 10 µm oder weniger und/oder Aluminiumhydroxid-(Al(OH)₃-) Feinteilchen mit einem mittleren Teilchendurchmesser von 10 µm oder weniger enthält.

11. Verfahren zur Herstellung eines Wabenformkörpers nach einem der Ansprüche 1 bis 10, worin das Wasser, wenn es zugesetzt wird, durch Sprühen zugesetzt wird.

12. Verfahren zur Herstellung eines Wabenformkörpers nach einem der Ansprüche 1 bis 11, worin das Formen mittels Extrusionsformen unter Verwendung einer Düse mit Schlitzen erfolgt, die eine Form aufweisen, die in Bezug auf jene der Trennwände komplementär ist.

13. Verfahren zur Herstellung eines Wabenformkörpers nach Anspruch 12, worin als das aggregierte teilchenförmige Material ein Material verwendet wird, das ein Pulver enthält, dass durch ein Sieb mit Öffnungen gesiebt wird, die 4/5 oder einem geringeren Anteil der Schlitzbreite der Düse entsprechen.

## Revendications

1. Procédé pour fabriquer un corps façonné en nid d'abeilles par utilisation d'un matériau de façonnage contenant de l'eau et des matériaux particulaires agrégés, les matériaux particulaires agrégés contenant deux types ou plus de matériaux particulaires agrégés ayant chacun une granulométrie moyenne de 10 µm ou moins, le procédé comprenant :
(i) une première étape de mélange consistant à mélanger les matériaux particulaires agrégés dans un mélangeur de façon à obtenir ainsi un mélange de façonnage de poudre sèche;
(ii) l'addition d'eau au mélange de façonnage de poudre sèche et le mélange du tout de façon à obtenir ainsi un mélange de façonnage de poudre humide ;
(iii) une étape de malaxage consistant à malaxer le mélange de façonnage de poudre humide de façon à obtenir une argile ;
dans lequel la première étape de mélange mélange les matériaux avec broyage par le mélangeur de l'agglomérat formé par agglomération de fines particules dans les matériaux particulaires agrégés, de façon à inhiber la génération d'un agglomérat, la masse de l'agglomérat restant sur le tamis après tamisage du mélange de façonnage de poudre sèche avec un tamis ayant une ouverture de 500 µm étant de 1 % en masse ou moins, et
le procédé comprenant en outre la mise de l'argile obtenue de cette manière sous la forme d'une structure en nid d'abeilles dans laquelle un grand nombre d'alvéoles sont réparties et formées par des parois de séparation, et le séchage de l'argile formée pour obtenir le corps façonné en nid d'abeilles.

2. Procédé pour fabriquer un corps façonné en nid d'abeilles selon la revendication 1, dans lequel la surface du matériau particulaire agrégé est revêtue avant l'étape de mélange.

3. Procédé pour fabriquer un corps façonné en nid d'abeilles selon la revendication 1 ou 2, dans lequel le matériau particulaire agrégé est classifié à l'avance pour que soit éliminé un agglomérat avant l'étape de mélange.

4. Procédé pour fabriquer un corps façonné en nid d'abeilles selon l'une quelconque des revendications 1 à 3, dans lequel, quand l'eau est ajoutée, un tensioactif est en outre ajouté à titre de dispersant.

5. Procédé pour fabriquer un corps façonné en nid d'abeilles selon l'une quelconque des revendications 1 à 4, dans lequel, dans l'étape de mélange, le mélange est effectué tandis qu'une vibration de pressurisation est appliquée au matériau de façonnage.

6. Procédé pour fabriquer un corps façonné en nid d'abeilles selon la revendication 5, dans lequel la vibration de pressurisation est générée par des ondes ultrasonores.

7. Procédé pour fabriquer un corps façonné en nid d'abeilles selon la revendication 5, dans lequel la vibration de pressurisation est générée par la présence dans un récipient du matériau de façonnage et de galets, et vibration du récipient.

8. Procédé pour fabriquer un corps façonné en nid d'abeilles selon l'une quelconque des revendications 1 à 4, dans lequel l'étape de mélange est effectuée par utilisation d'un mélangeur ayant une aube d'agitation, et
le mélange est effectué par rotation de l'aube de mélange pour agiter le matériau de façonnage pendant qu'une force de cisaillement est appliquée au matériau de façonnage.

9. Procédé pour fabriquer un corps façonné en nid d'abeilles selon l'une quelconque des revendications 1 à 8, dans lequel l'étape de mélange et l'étape de malaxage sont effectuées avec des dispositifs individuels, respectivement, et
un mélangeur qui effectue l'étape de mélange est directement connecté à un malaxeur qui effectue l'étape de malaxage.

10. Procédé pour fabriquer un corps façonné en nid d'abeilles selon l'une quelconque des revendications 1 à 9, dans lequel, en tant que matériau particulaire agrégé, est utilisé un matériau formant une cordiérite qui contient de fines particules d'alumine (Al₂O₃) ayant une granulométrie moyenne de 10 µm ou moins et/ou de fines particules d'hydroxyde d'aluminium (Al(OH)₃) ayant une granulométrie moyenne de 10 µm ou moins.

11. Procédé pour fabriquer un corps façonné en nid d'abeilles selon l'une quelconque des revendications 1 à 10, dans lequel, quand l'eau est appliquée, elle est ajoutée tout en étant pulvérisée.

12. Procédé pour fabriquer un corps façonné en nid d'abeilles selon l'une quelconque des revendications 1 à 11, dans lequel le façonnage est un façonnage par extrusion utilisant une filière ayant des fentes dont la forme est complémentaire de celle des parois de séparation.

13. Procédé pour fabriquer un corps façonné en nid d'abeilles selon la revendication 12, dans lequel, en tant que matériau particulaire agrégé, est utilisé un matériau contenant une poudre passant à travers un tamis dont l'ouverture représente les 4/5 ou moins de la largeur de fente de la filière.
